# EUROPEAN PATENT SPECIFICATION

(11) **EP 2 757 454 B1**
(45) Date of publication and mention of the grant of the patent: **09.11.2016**
(21) Application number: 14150436.5
(22) Date of filing: 08.01.2014
(51) Int. Cl.: G06F 3/0481, G06F 3/0484

(54) **Information displaying device, method, and program**
Informationsanzeigevorrichtung, Verfahren und Programm
Dispositif d'affichage d'informations, procédé et programme

(30) Priority: 16.01.2013 JP 2013005222
(43) Date of publication of application: 23.07.2014
(73) Proprietor: Azbil Corporation, Chiyoda-ku Tokyo 100-6419 (JP)
(72) Inventor: Tsutsui, Hiroaki, Tokyo, Tokyo 100-6419 (JP)
(74) Representative: Lavoix

(56) References cited:
- EP-A1- 1 811 360
- US-A1- 2003 007 016

## Description

The present invention relates to an information displaying technology, and, in particular, relates to a screen display operating technology for operating a screen display based on a touch operation by a user on an operating surface detected by a touch operation detecting device such as a touch panel or a touch pad.

EP 1 811 360 A1 discloses an input device for the user to input an instruction or information to an apparatus, and more specifically, relates to an input device with which the user can input an instruction or information by use of a body part such as a hand based on information displayed on a display or the like.

US 2003/007016 A1 discloses alternate reduced size on-screen pointers for accessing selectable icons in high icon density regions of user interactive display interfaces.

Conventionally, mobile information terminals such as tablets terminals or smart phones, or the like, have broadly used touch panels as pointing devices. A touch panel is a device made from a flat touch sensor that is disposed on a display screen, such as an LCD, to detect the location of a contact by a finger or a pen, and output it as input location information. Typically, when compared to a mouse pointer, this not only enables the size of the device itself to be smaller, and enables integration with the keyboard, but also has the benefit of enabling the operating area required for positional input to be small.

Such a touch panel requires direct touch on the display screen at the time of an operational input, and thus there is a problem in that operation is difficult when the user is away from the display screen. For example, a car navigation device that is mounted in a vehicle has the display screen thereof disposed in a location that is away from the driver so that the driver can view the display screen without diverting the line-of-sight too far from the forward direction. Because of this, it is difficult for the driver to operate correctly the operating symbols that are displayed on the screen.

This type of situation occurs not just in car navigation devices, but also in monitoring and controlling systems such as distributed control systems (DCS) for monitoring and controlling facilities such as buildings or plants. In such a monitoring and controlling system, the statuses of the various equipment that are installed in the facility are displayed on a large screen, for monitoring and control by a plurality of operators. Consequently, in this type of monitoring/controlling system as well, there is some distance between the operator and the display screen, and thus the operator is unable to touch directly a touch panel on the display screen.

Conventionally, as a technology for operating a display screen that is installed at a location that is away from the user, a car navigation device wherein the display screen is operated by a touch panel that is disposed close at hand has been proposed (referencing, for example, JP 2006-072854).

A touchpad is one type of pointing device that is used for information terminals, such as notebook personal computers, and the like, and, like a touch panel, is made from a flat touch sensor, and has essentially the same functions as a touch panel.

With this car navigation device, an operating pointer that is shaped like a hand, as an imaginary hand of the user, that is, a "virtual hand" is displayed on the screen, and the virtual hand is moved based on the position of the hand of the user that is detected by the touchpad, where not just operating buttons that are displayed on the screen, but also operated objects such as analog operating handles such a volume control knob, can be operated by the virtual hand.

Consequently, moving the position of the cursor based on position information detected by the touchpad can provide high levels of operational convenience when compared to the ordinary screen display operating technology wherein a cursor is used to operate an operated object that is displayed on the display screen.

However, in this conventional technology, the size of the virtual hand is held constant, assuming a constant display scale for the objects that are displayed on the screen, and thus there is a problem in relation to objects wherein the display scale changes, because the width of the finger of the virtual hand will not fit with the spacing and sizes of the objects.

That is, with a conventional car navigation device, it is necessary to ensure a given degree of visibility in order to see the display screen while driving. Because of this, the operated objects, such as operating buttons, operating handles, and the like, are also displayed on the screen with some degree of size, and have a given display scale. Consequently, the virtual hand is also displayed on the screen with a fixed size that is suited to the display scale.

On the other hand, in a facilities controlling system that monitors and controls a facility such as a building or a plant, the scope that is monitored and controlled is varied depending on the situation. Moreover, that which is controlled are not specialized operated objects, such as operating buttons were operating surfaces that are for the purpose of operation, but rather that which is controlled are areas or equipment that structure the actual facility.

For example, in a building facility, when monitoring the status of a floor, an operation is performed to select, from a facility configuration screen for the entire facility, the floor that is to be monitored, to display, on the screen, a floor screen that shows a system diagram of the floor as a whole, and that also displays various types of measurement data, such as temperatures and flow rates, on a plot plan, making it possible to ascertain the state of the entire floor efficiently.

Moreover, when a fault occurs in one of the areas of the floor, an operation is performed to select, from the floor screen that is displayed on the screen, the area wherein the fault occurred, thus making it possible to ascertain efficiently the equipment in the area wherein the fault has occurred, through displaying various types of measured data on the system diagram or plot plan of the area wherein the fault occurred.

Moreover, performing a selection operation on a specified equipment object on the areas screen, to display an equipment screen that shows the structure of that equipment and the operating status thereof, makes it possible to ascertain more efficiently the status of the fault that has occurred.

At this time, while system diagrams or plot plans of the equipment that are installed are displayed in the floor screen or the area screen, there are differences in the sizes of the equipment objects that are actually displayed on the screen. That is, because with a floor screen the scope of that which is displayed is wide, a larger number of equipment objects is displayed, when compared to an area screen, so the display scale is higher. Because of this, the equipment objects that are displayed on a floor screen are displayed smaller than an equipment objects that are displayed on the areas screen.

Consequently, when an attempt is made to select an equipment object on a floor screen using a virtual hand of a size that fits the display miniaturization of the area screen, the fingers on the virtual hand will be too fat when compared to the sizes of the equipment objects, resulting in multiple equipment objects being selected all at once, preventing the efficient selection of a single specific equipment object alone.

Conversely, with a virtual hand of a size that matches the display scale of the floor screen, when attempting a selection operation for an equipment object on the area screen, the fingers on the virtual hand will be too narrow when compared to the size of the equipment object, causing the distance of movement for selecting the equipment object to be large, preventing efficient selection operations.

The present invention is to solve such problems, and the object thereof is to provide a screen display operating technology wherein a selection operation of an object to be operated by a virtual hand can be performed efficiently, even if there are differences in display scales depending on the display screen.

In order to achieve the object set forth above, an information displaying device according to the present invention for displaying on a screen displaying portion display data that includes a plurality of objects that are subject to a selection operation by a user, comprises: a virtual hand generating portion for generating a virtual hand that displays an image of an imaginary hand of the user; and a screen generating portion for generating screen data for indicated display data and generating composited screen data wherein a virtual hand is composited at a location in the screen data depending on a user touch operation detected by a touch operation detecting portion, wherein: the virtual hand generating portion includes: a transformation ratio calculating portion for calculating a display scale of objects in the screen display, based on the spacing between objects and/or the sizes of objects included in the display data, and for calculating a transformation ratio for the virtual hand from the display scale and a finger width of the virtual hand; and a virtual hand transforming portion for transforming the virtual hand based on the calculated transformation ratio to a size suited to the object on the screen display through enlarging or reducing the virtual hand.

Moreover, in one structural example of the information displaying device according to the present invention: the transformation ratio calculating portion, when calculating the display scale, identifies an estimated operating area based on a finger position of the virtual hand, and calculates the display scale from the spacing between objects or the size of an object included in the estimated operating area of the display data.

Moreover, in one structural example of the information displaying device according to the present invention: the transformation ratio calculating portion, when calculating the display scale, calculates statistical values for the spacing and sizes of the individual objects, and defines, as the display scale, the statistical value for the spacing or for the sizes, whichever is the smallest.

Moreover, in one structural example of the information displaying device according to the present invention: when a touch operation indicates a virtual hand enlarging or reducing operation, the virtual hand generating portion further includes a transformation ratio adjusting portion for adjusting, larger or smaller, the transformation ratio that is used by the virtual hand generating portion.

An information displaying method according to the present invention for generating display data from display information and displaying it on a screen displaying portion that includes a plurality of objects that are subject to a selection operation by a user, includes: a virtual hand generating step wherein a virtual hand generating portion generates a virtual hand that displays an image of an imaginary hand of the user; and a screen generating step wherein a screen generating portion generates screen data for indicated display data and generating composited screen data wherein a virtual hand is composited at a location in the screen data depending on a user touch operation detected by a touch operation detecting portion, wherein: the virtual hand generating step includes: a transformation ratio calculating step for calculating a display scale of objects in the screen display, based on the spacing between objects and/or the sizes of objects included in the display data, and for calculating a transformation ratio for the virtual hand from the display scale and a finger width of the virtual hand; and a virtual hand transforming step for transforming the virtual hand based on the calculated transformation ratio to a size suited to the object on the screen display through enlarging or reducing the virtual hand.

Moreover, a program according to the present invention is a computer program for causing a computer to function as any one of the information displaying devices described above and/or to perform the steps of the method described above.

According to an embodiment, a transformation ratio calculating portion calculates a display scale for an object in a display screen based on the spacing between objects and/or the sizes of objects included in the display data, and calculates a virtual hand transformation ratio from the display scale and the finger widths of the virtual hand, and a virtual hand transforming portion transforms the virtual hand to a size suited to the objects in the screen display through enlarging or reducing the virtual hand based on the transformation ratio.

In the present invention the finger widths of the virtual hand are displayed on the screen in appropriates size, neither too large nor too small when compared to the spacing and sizes of objects displayed on the screen. Because of this, it is possible to use the virtual hand to perform efficiently a selection operation for an object that is to be operated, even if the display scale varies depending on the display screen. This makes it possible to provide superior convenience in operation when the user uses the virtual hand to operate a screen display at a location that is away from the screen display.

Further advantages, features, aspects and details are evident from the dependent claims, the description and the drawings.

So that the manner in which the above recited features of the present invention can be understood in detail, a more particular description of the invention, briefly summarized above, may be read by reference to embodiments. The accompanying drawings relate to embodiments of the invention and are described in the following:
FIG. 1 is a block diagram illustrating a structure for an information displaying device according to a first embodiment.
FIG. 2 is an example structure of touch operation assignment data.
FIG. 3 is a flowchart illustrating a display controlling procedure for the information displaying device.
FIG. 4 is an example of a screen display that is displayed prior to the start of a touch operation.
FIG. 5 is an example of a screen display at the time of the start of a touch operation.
FIG. 6 is an example of a screen display wherein the display is simply enlarged.
FIG. 7 is a flowchart showing a virtual hand transformation procedure.
FIG. 8 is an explanatory diagram showing the relationship between the display scale and the finger width.
FIG. 9 is an example of identifying the estimated operating areas.
FIG. 10 is an example of a screen display of an enlarged display that includes object transformation.
FIG. 11 is a block diagram illustrating a structure for an information displaying device according to a second embodiment.
FIG. 12 is a flowchart illustrating a transformation ratio adjusting procedure.
FIG. 13 is an explanatory diagram for a transformation ratio adjusting operation.

### [Embodiments of the Present Invention]

Forms for carrying out the present invention will be explained next in reference to the figures.

### [First Embodiment]

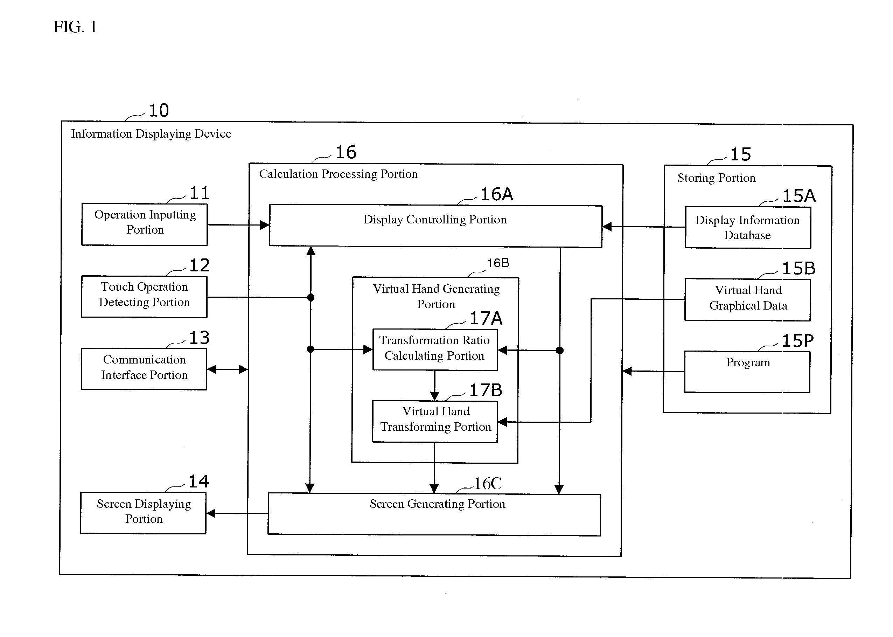

An information displaying device 10 according to a first embodiment according to the present invention will be explained first, referencing FIG. 1. FIG. 1 is a block diagram illustrating a structure of an information displaying device according to the first embodiment.

This information displaying device 10, overall, is formed from an information processing device such as a server device or a personal computer, and has functions for reading out from a database, and for displaying on a screen, display data including a plurality of objects that are subject to a selection operation by the user, in response to user operations.

The information displaying device 10 is provided with an operation inputting portion 11, a touch operation detecting portion 12, a communication interface portion 13, a screen displaying portion 14, a storing portion 15, and a calculation processing portion 16, as the main functional portions thereof.

The operation inputting portion 11 is made from an operation inputting device, such as a keyboard or a mouse, and has a function for detecting a user operation and for outputting it to the calculation processing portion 16.

The touch operation detecting portion 12 is made from a flat touch sensor, such as a touch panel or a touch pad, and has a function for detecting a touch operation by the user on the operating surface and outputting, to the calculation processing portion 16, the detection result such as, for example, the type of operation, the detection location, and the like.

The communication interface portion 13 has the function of exchanging various types of data with external devices (not shown), through performing data communication with the external devices through a communication circuit such as a LAN or a USB.

The screen displaying portion 14 is made from a screen displaying device, such as an LCD, and has a function for displaying, on a screen, various types of screen data, outputted from the calculation processing portion 16, such as operating menus, display information, and the like.

The storing portion 15 is made from a storage device such as a hard disk or a semiconductor memory, and has a function for storing processing information, a program 15P, and the like, that are used in various procedures that are executed by the calculation processing portion 16.

The program 15P is a program for embodying the processing portion for executing various types of processes, such as the screen displaying operation, and the like, through execution on a CPU of the calculation processing portion 16, and is read-in and stored in advance in the storing portion 15 through the communication interface portion 13 from an external device or from a recording medium (both not shown).

The main processing information that is stored in the storing portion 15 includes display information database 15A and virtual hand graphical data 15B.

The display information database 15A is a database that stores various types of display data to be displayed on the screen displaying portion 14 in response to user operations. For example, in a monitoring/controlling system, a facilities configuration chart of the facility as a whole, system diagrams and plot plans of the individual floors, structural diagrams of the individual equipment, operating statuses and measurement data for the individual equipment, which are updated constantly, and the like are stored in the display information database 15A as display data.

The display information includes a plurality of objects that are subject to selection operations by the user on the display screen. For example, the display objects that may be displayed on the facilities configuration chart may include objects corresponding to areas such as buildings, floors, rooms, partitions, and the like, and the display data of a system diagram may include objects corresponding to various equipment that structure the system, such as pumps, motors, valves, switches, flow meters, temperature meters, fluid level meters, tanks, headers, pipes, and the like.

The virtual hand graphical data 15B is graphical data such as image data of the shape of a human hand, vector data, and the like, and is stored in advance in the storing portion 15. A virtual hand is displayed, as an image of an imaginary hand of the user, on the display screen based on this virtual hand graphical data 15B.

The calculation processing portion 16 includes a CPU and the peripheral circuitry thereof, and embodies the processing portions that execute the various types of processes, such as the screen displaying operations, through reading out and executing the program 15P of the storing portion 15.

The main processing portions that are embodied by the calculation processing portion 16 are a display controlling portion 16A, a virtual hand generating portion 16B, and a screen generating portion 16C.

The display controlling portion 16A has functions for specifying, acquiring from the display information database 15A of the storing portion 15, and outputting to the virtual hand generating portion 16B and the screen generating portion 16C, the display data that is to be displayed by the screen displaying portion 14, in response to the details of user operations, and location information, that are detected by the operation inputting portion 11 and the touch operation detecting portion 12.

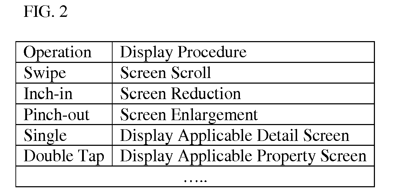

FIG. 2 is an example structure of touch operation assignment data. Assignment detail for the display process for touch operations by the user are recorded here, where display procedures to be executed are assigned corresponding to individual touch operations such as a swipe, a pinch-in, a pinch-out, a single tap, a double tap, and so forth. Based on the touch operation assignment data, the display controlling portion 16A executes a display procedure corresponding to the touch operation detected by the touch operation detecting portion 12.

For example, the display procedure known as a "screen scroll" is assigned to the touch operation known as a "swipe," where a finger is slid while in contact with the operating surface. In this case, the direction in which the screen scrolls is determined by the direction of the swipe, where, for example, if the swipe is toward the left, a display procedure that causes the display screen to scroll from the right to the left is executed, revealing the display that was hidden on the right side of the screen. Moreover, if the swipe is upward, a display procedure that causes the display screen to scroll from the bottom to the top is executed, revealing the display that was hidden on the bottom of the screen. Moreover, the direction of the swipe is not limited to either the vertical or horizontal direction, but rather a screen scroll procedure in a diagonal direction is performed in response to a swipe in the diagonal direction.

A pinch-in, where two fingers are slid on the operating surface to reduce the gap therebetween, and a pinch-out, wherein two fingers are slid on the operating surface to increase the gap therebetween, are assigned respectively to display procedures for reducing the size of the screen and increasing the size of the screen. This causes the display screen to get smaller or larger, centered on the central position between the two fingers.

Moreover, a "single tap," where a finger taps the operating surface once, and a "double tap," where a finger taps the operating surface twice in a row, are assigned to a display procedure for displaying a detail screen for the object, and to a display procedure for displaying a properties screen for the object. As a result, detail information or property information for the object that was tapped will be displayed on the screen.

When a screen display is operated using an ordinary pointing device, such as a mouse, the user must execute combinations of a plurality of operations. For example, when performing a screen scroll, it is necessary to move the mouse cursor to the right edge or the bottom edge of the screen, to select the scrollbar on the screen, and then to drag the scrollbar either vertically or horizontally. Moreover, when increasing or decreasing the size of the screen for displaying the detail screen or in the property screen, it is necessary to perform an operation to determine an operating location or an object for the operation, to move the mouse cursor to a button corresponding to the desired display procedure, and then to click the button. Moreover, selecting from a menu when no button has been provided corresponding to the display procedure requires an operation for opening the menu, such as a context menu that displays a list of desired display procedures, and an operation for selecting the desired display procedure from the menu.

In the present embodiment, as illustrated in FIG. 2, the latest display information desired by the user can be displayed on the screen through assigning display procedures to the various touch operations. Doing so is able to eliminate the complex operations required when using a pointing device such as a mouse, as described above, enabling extremely high convenience in operation.

Moreover, when assigning display procedures to the touch operations, touch operations that resemble the changes in the display content caused by the display procedures may be assigned. For example, for the screen scroll, wherein the content of the display slides in an arbitrary direction on the screen, a swipe, wherein a finger is slid on the operating surface, may be assigned, and the scroll direction may be matched to the swipe direction. Moreover, for a screen reduction, wherein the display spacing on the screen is narrowed, a pinch-in, wherein the fingers are slid to narrow the gap therebetween, may be assigned, and for a screen enlargement, wherein the display spacing on the screen is enlarged, a pinch-in, wherein the fingers are slid to enlarge the gap therebetween, may be assigned.

This makes it possible for the user to intuitively envision the associations with the touch operations depending on the desired change in the content of the display, enabling efficient and smooth screen display operation without referencing operating manuals, or the like.

The virtual hand generating portion 16B has the function of generating the virtual hand to for displaying the image of the hand of the user, based on the virtual hand graphical data 15B of the storing portion 15.

The virtual hand generating portion 16B is provided with two processing portions, a transformation ratio calculating portion 17A and a virtual hand transforming portion 17B.

The transformation ratio calculating portion 17A has a function for calculating the display scale of an object in the screen display based on the spacing and/or size of objects that are included in the display data from the display controlling portion 16A, and a function for calculating a transformation ratio for the virtual hand the display scale and the finger widths of the virtual hand. The finger widths of the virtual hand are derived from the virtual hand graphical data 15B and the transformation ratio.

The virtual hand transforming portion 41 has a function for transforming the virtual hand to a size suited to the objects that are displayed on the screen, through enlarging or reducing by a congruent transformation the virtual hand graphical data 15B of the storing portion 15 based on the transformation ratio calculated by the transformation ratio calculating portion 17A.

The convenience in operations when selecting an object using a virtual hand is controlled by the spacing between objects, and by a measure that indicates how fine an object is one displayed on a screen, such as the object size, that is, is controlled by the display scale. For example, if the object spacing is sufficient, or the object size is adequate, when compared to the finger widths of the virtual hand, then selection of the object will be easy.

Consequently, in the present invention the spacing between objects and the object sizes are calculated as a display scale, and the virtual hand transformation ratio is calculated from the display scale and the finger widths of the virtual hand, to adjust the size of the virtual hand.

The screen generating portion 16C has a function for generating screen data for displaying the display data from the display controlling portion 16A, and a function for generating composited screen data, wherein the virtual hand that has been generated by the virtual hand generating portion 16B is composited at a position, in the screen data, corresponding to a touch operation on the operating surface, detected by the touch operation detecting portion 12, and for outputting the result to the screen displaying portion 14.

### [Operation of the First Embodiment]

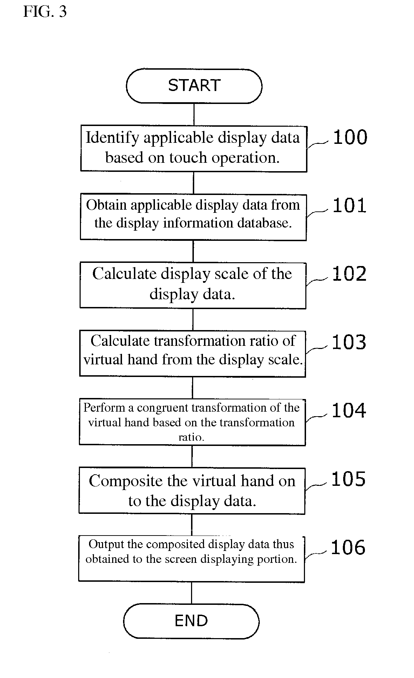

The operation of the information displaying device 10 according to the present embodiment will be explained next in reference to FIG. 3. FIG. 3 is a flowchart illustrating a display controlling procedure for the information displaying device according to the first embodiment.

The display controlling portion 16A specifies display data that is to be displayed by the screen displaying portion 14 in accordance with the detail of a user operation, and the position information thereof, detected by the touch operation detecting portion 12 (Step 100), and acquires the display data from the display information database 15A of the storing portion 15 and outputs it to the virtual hand generating portion 16B and the screen generating portion 16C (Step 101).

Following this, the transformation ratio calculating portion 17A calculates the scale of the objects in the screen display based on the spacing between objects and/or the sizes of the objects included in the display data from the display controlling portion 16A (Step 102), and calculates the virtual hand transformation ratio from the display scale and the virtual hand finger widths (Step 103).

Following this, the virtual hand transforming portion 17B, based on the transformation ratio calculated by the transformation ratio calculating portion 17A, and performs a congruent transformation of the virtual hand graphical data 15B of the storing portion 15 to enlarge or reduce the virtual hand to a size that is suited to the objects in the screen display (Step 104).

Thereafter, the screen generating portion 16C generates screen data for displaying the display data from the display controlling portion 16A, generates composite screen data by compositing the virtual hand, generated by the virtual hand generating portion 16B, onto a position in the display data depending on the touch operation, detected by the touch operation detecting portion 12, by the user on the operating surface (Step 105), and outputs the composite screen data to the screen displaying portion 14 (Step 106).

As a result, the display data desired by the user is displayed by the touch operation, and a virtual hand suited to the display scale of the objects is displayed on the display screen area, in the screen displaying portion 14.

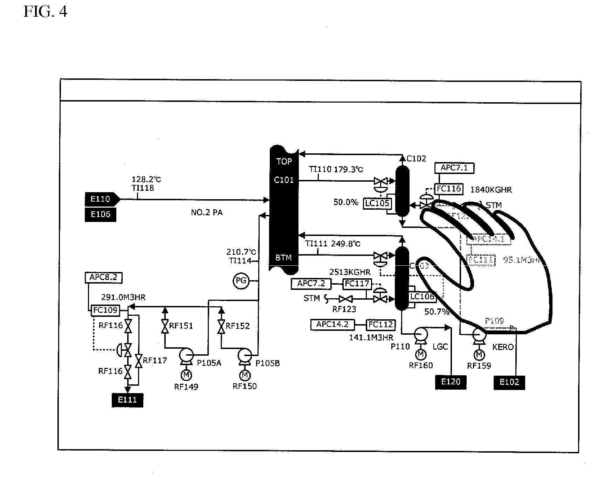

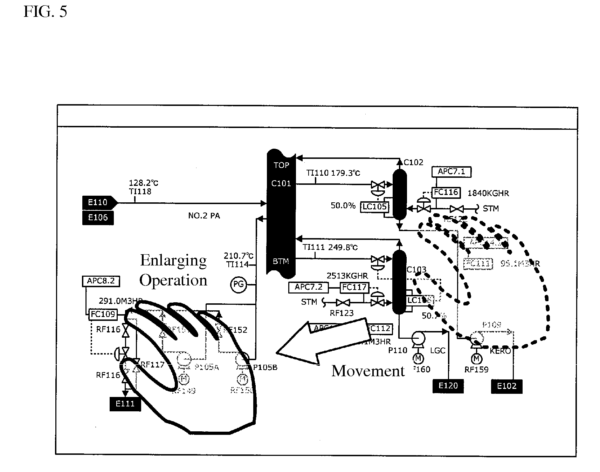

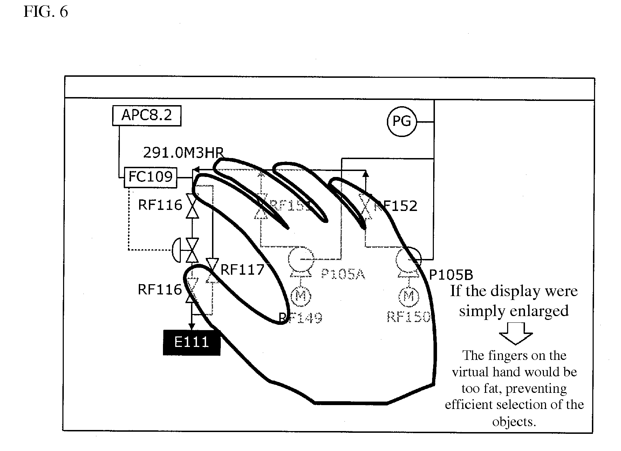

FIG. 4 is an example of a screen display that is displayed prior to the start of a touch operation. FIG. 5 is an example of a screen display at the time of the start of a touch operation. FIG. 6 is an example of a screen display that is displayed through simple enlargement. Here an example of a case wherein the present invention is applied to a monitoring/controlling system to display a system diagram on a screen will be illustrated as an example.

If wishing to enlarge the display of an area A of the display screen illustrated in FIG. 4, the user, after moving the virtual hand to the area A through a tap or the like, as illustrated in FIG. 5, would perform an enlarging operation through a pinch-out, or the like.

If here the display detail and the virtual hand were simply enlarged and displayed, without transforming the virtual hand, then, as illustrated in FIG. 6, the fingers of the virtual hand would become too wide, preventing efficient object selection.

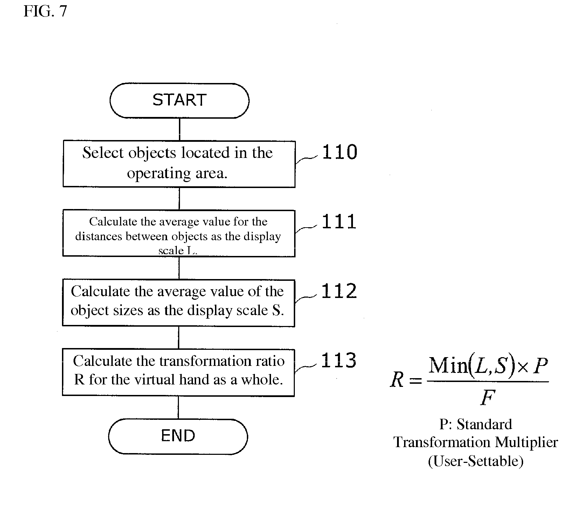

Consequently, in the present embodiment, a virtual hand transformation ratio calculating procedure, as illustrated in FIG. 7, is executed in the transformation ratio calculating portion 17A, to calculate the transformation ratio for transforming the virtual hand to an appropriate size depending on the display scale of the objects. FIG. 7 is a flowchart illustrating the virtual hand transforming procedure.

First the transformation ratio calculating portion 17A identifies, from the virtual hand finger position, and estimated operating area for the virtual hand, and selects, from the display data from the display controlling portion 16A, the objects located within the estimated operating area (Step 110).

Next the transformation ratio calculating portion 17A derives a display scale L from the average value for the object spacing (Step 111) and a display scale S from the average value of the object size (Step 112), based on the objects located within the estimated operating area.

At this time, the object spacing is defined as the spacing between the center positions (the positions of the center of gravity) of the two objects, and the object size is defined as the distance between the two points that are most greatly separated, from among two arbitrary points positioned on the outer periphery of an object. Consequently, the object spacing and the object size will differ depending on the object, and thus a statistical value, such as the average value thereof, is used for the display scale.

Here the objects for finding the statistical value may be those over the entire range of the display screen, or an estimated operating area may be identified based on the virtual hand finger location and the display scale may be calculated from the spacings between objects and the sizes of objects included in the estimated operating area within the display data. Doing so makes it possible to obtain a transformation ratio that is suited to the display scale of objects that are located in the vicinities of the fingers of the virtual hand, which have high probabilities of being selected by the user.

Thereafter, the transformation ratio calculating portion 17A selects which ever is the smaller value Min (L, S) of the display scale L and the display scale S, and multiplies this by a standard transformation multiplier P and divides by a virtual hand finger width F, to calculate a transformation ratio R for the entirety of the virtual hand (Step 113). Here the standard transformation multiplier P is a ratio that indicates the relationships between the finger width F and the display scales L and S, a value that can be set in advance depending on user preferences. Note that Min ( ) is a mathematical function for selecting, from a plurality of elements, the one with the smallest value.

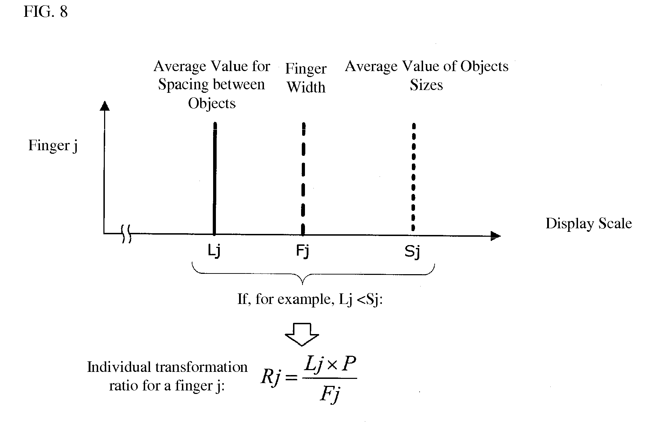

FIG. 8 is an explanatory diagram showing the relationship between the display scale and the finger width. Because the magnitude relationships between the object spacing and the object sizes will vary depending on the content of the display, the degree of convenience in use when selecting an object using the virtual hand will also vary. For example, even if there is adequate space between objects when compared to the fingers of the virtual hand, if the sizes of the objects are too large, then the gaps between adjacent objects will be narrow, making object selection difficult. Moreover, even if the sizes of objects are adequate when compared to the fingers of the virtual hand, if the spacing between objects is too small, then the gaps between adjacent objects will be small, making object selection difficult.

Because of this, the convenience in operation when selecting an object using a virtual hand can be understood to be affected greatly by the display scale L or the display scale S, whichever is smaller. FIG. 8 shows an example of a case wherein the display scale L < finger width F < display scale S, where, when calculating the transformation ratio R, it is the display scale L, which has the smaller value between the display scale L and the display scale S, that is used.

Moreover, for the estimated operating area, one estimated operating area corresponding to the virtual hand may be identified depending on the display position of the virtual hand, but, for example, circular ranges around each finger, centering on the fingertip positions, may be identified as estimated operating areas.

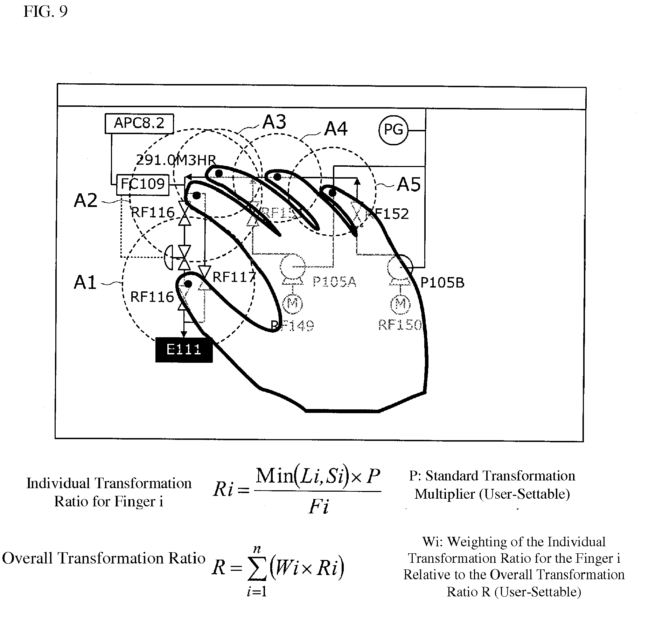

FIG. 9 is an example of identifying an estimated operating area. Here the setting is such that the estimated operating area is wider the greater the operating area of each individual figure and the higher the frequency of operation thereby.

In this way, when an estimated operating area Ai is identified for each finger i, the overall transformation ratio for the entire virtual hand is calculated after calculating individual transformation ratios Ri. The individual transformation ratios Ri are calculated by finding the display scales Li and Si from the objects that exist within the estimated operating area Ai of the applicable finger i, in the same manner as described above, and selecting the smallest value Min (Li, Si), multiplying these by the standard transformation multiplier P, and then dividing by the virtual hand finger width F.

Moreover, the overall transformation ratio R is calculated through a sum-of-products calculation by weighting the individual transformation ratios Ri for the fingers i by the weightings Wi. Note that the weightings Wi should be set to be higher the greater the operating area of the finger or the higher the frequency of operation thereby.

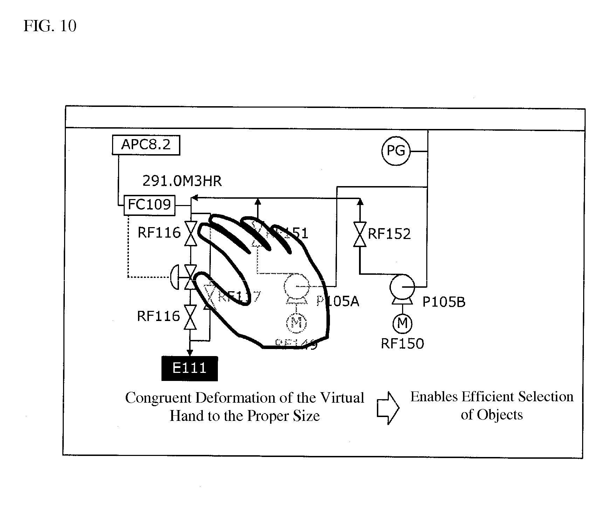

FIG. 10 is an example of a screen display of an enlarged display that includes object transformation. This makes it possible to display the virtual hand with a size that is suited to the display scale of the objects, on the display screen, through transforming the virtual hand by the transformation ratio R, calculated based on the display scale of the objects, and displaying it on the screen.

### [Effects of the First Embodiment]

In this way, in the present embodiment, the transformation ratio calculating portion 17A calculates the display scale of the objects in the screen display, based on the spacing between the objects and/or the size of the objects included in the display data, and calculates a transformation ratio for the virtual hand from the display scale and the virtual hand finger widths, and the virtual hand transforming portion 17B transforms the virtual hand to a size suited to the objects that are displayed on the screen, through enlarging or reducing the virtual hand based on the transformation ratio.

As a result, the finger widths of the virtual hand are displayed on the screen in appropriates size, neither too large nor too small when compared to the spacing and sizes of objects displayed on the screen. Because of this, it is possible to use the virtual hand to perform efficiently a selection operation for an object that is to be operated, even if the display scale varies depending on the display screen. This makes it possible to provide superior convenience in operation when the user uses the virtual hand to operate a screen display at a location that is away from the screen display.

Moreover, when, in the present embodiment, the transformation ratio calculating portion 17A calculates the display scale, an estimated operating area may be identified using the positions of the fingers of the user, from touch operations, as a standard, and the display scale may be calculated from the spacing between objects and size of objects included in the estimated operating areas in the display data.

Doing so makes it possible to obtain a transformation ratio that is suited to the display scale of objects that are located in the vicinities of the fingers of the virtual hand, which have high probabilities of being selected by the user.

Moreover, when, in the present embodiment, the transformation ratio calculating portion 17A calculates the display scale, statistical values may be calculated for the spacings between objects and the sizes of objects, and the smaller of the statistical values, either the statistical value for the spacing or the statistical value for the sizes, is used as the display scale.

This makes it possible to calculate the transformation ratio based on whichever display scale has the greatest impact on the convenience of use when selecting an object with the virtual hand, enabling the virtual hand to be transformed to a more appropriate size.

Note that while, in the present invention, a case wherein an estimated operating area Ai was identified for each finger i was presented as an illustrative example in FIG. 9, it is not necessary to handle all five fingers, but rather, for example, the display scale may be calculated using only an estimated operating area A1 for the thumb and an estimated operating area A2 for the index finger, which are the fingers that are used the most in touch operations.

Moreover, because the thumb and the index finger are used with extremely high frequencies when compared to the other fingers, so a single estimated operating area may be defined as an ellipse, an oval, or a rectangle that includes the locations of the tips of the thumb and of the index finger. This makes it possible to transform the virtual hand to a size that is suited to the display scale of the objects that are positioned around the thumb and the index finger.

### [Second Embodiment]

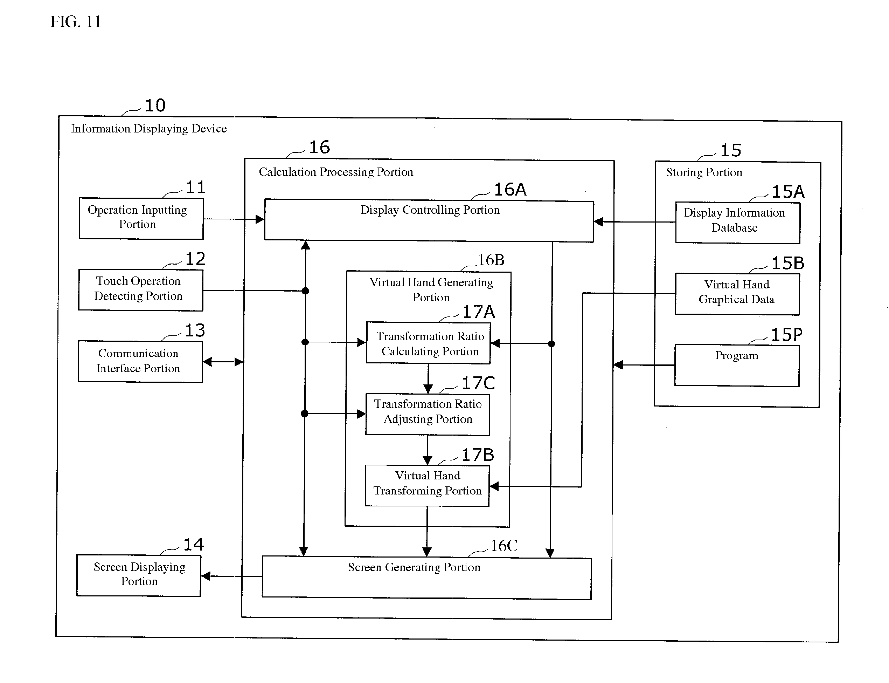

An information displaying device 10 according to a second embodiment according to the present invention will be explained next in reference to FIG. 11. FIG. 11 is a block diagram illustrating a configuration for an information processing device according to the second embodiment.

In the present embodiment, when compared to the first embodiment, a transformation ratio adjusting portion 17C is added to the virtual hand generating portion 16B.

That is, the transformation ratio adjusting portion 17C has a function for adjusting either bigger or smaller the transformation ratio used by the virtual hand transforming portion 17B when a touch operation that is detected by the touch operation detecting portion 12 indicates a virtual hand enlarging or reducing operation.

The other structures in the present embodiment are identical to those of the first embodiment, so detailed explanations thereof are omitted here.

### [Operation of the Second Embodiment]

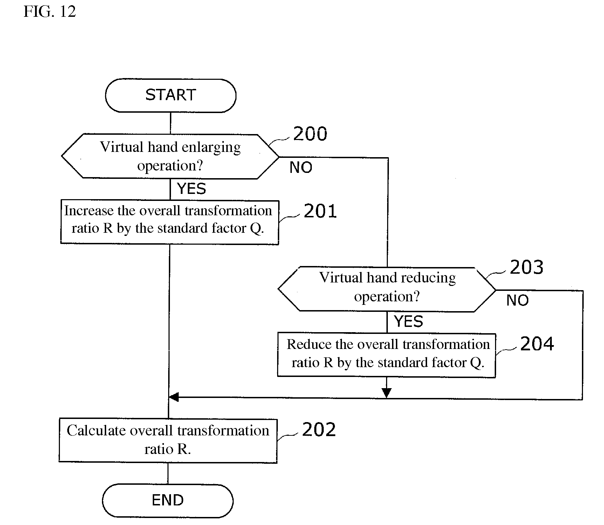

The operation of the information displaying device according to the present form of embodiment will be explained next in reference to FIG. 12.FIG. 12 is a flowchart illustrating transformation ratio adjusting procedure for the information displaying device according to the second embodiment.

The transformation ratio adjusting portion 17C performs the transformation ratio adjusting procedure of FIG. 12 when, in the display controlling procedures in FIG. 3, described above, control advances from Step 103 to Step 104.

First, the transformation ratio adjusting portion 17C checks whether or not the touch operation detected by the touch operation detecting portion 12 is a virtual hand enlarging operation (Step 200). If here it is a virtual hand enlarging operation (Step 200: YES), then after enlarging the transformation ratio R, calculated by the transformation ratio calculating portion 17A, by a standard factor Q (Step 201), it is outputted to the virtual hand transforming portion 17B (Step 202).

On the other hand, if the touch operation detected by the touch operation detecting portion 12 is not a virtual hand enlarging operation (Step 200: NO), then the transformation ratio adjusting portion 17C checks whether or not the touch operation is a virtual hand reducing operation (Step 203). If here it is a virtual hand reducing operation (Step 203: YES), then after reducing the transformation ratio R, calculated by the transformation ratio calculating portion 17A, by a standard factor Q (Step 204), it is outputted to the virtual hand transforming portion 17B (Step 202).

Moreover, if the touch operation that is detected by the touch operation detecting portion 12 is not a virtual hand reducing operation (Step 203: NO), then the transformation ratio R calculated by the transformation ratio calculating portion 17A is outputted as is, without adjustment, to the virtual hand transforming portion 17B (Step 202). Note that when it comes to the enlarging/reducing operations, there is no limitation to the example assignments described above, but rather other touch operations may be assigned.

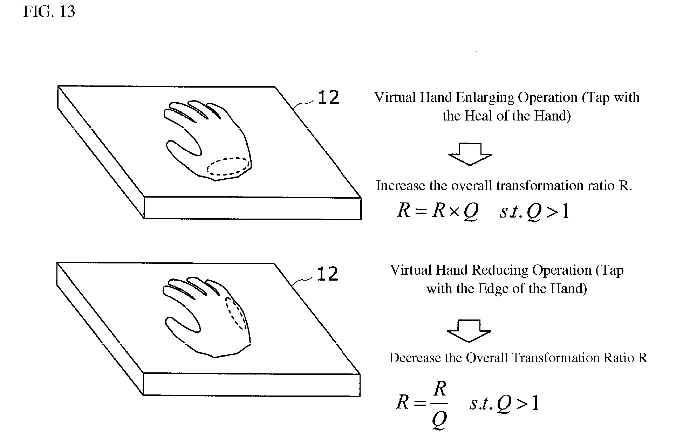

FIG. 13 is an explanatory diagram for a transformation ratio adjusting operation. Here an operation wherein there is a tap on an operating surface of the touch operation detecting portion 12 by the heel of the hand of the user is assigned as the virtual hand enlarging operation. When such a virtual hand enlarging operation is detected, the transformation ratio R is adjusted larger by multiplying, by the standard factor Q (Q >1), the transformation ratio R, calculated by the transformation ratio calculating portion 17A.

Moreover, an operation wherein there is a tap on an operating surface of the touch operation detecting portion 12 by the little finger side of the hand of the user is assigned as the virtual hand reducing operation. When such a virtual hand reducing operation is detected, the transformation ratio R is adjusted smaller by dividing, by the standard factor Q (Q >1), the transformation ratio R, calculated by the transformation ratio calculating portion 17A.

### [Effects of the Second Embodiment]

In this way, in the transformation ratio adjusting portion 17C in the present embodiment, the transformation ratio used by the virtual hand transforming portion 17B is adjusted larger or smaller when a touch operation that is detected by the touch operation detecting portion 12 is a virtual hand enlarging or reducing operation.

This enables fine adjustments, through touch operations, to the size of the virtual hand, depending on the intentions of the user.

While the present invention was explained above in reference to forms of embodiment, the present invention is not limited by the forms of embodiment set forth above. The structures and details of the present invention may be modified in a variety of ways, as can be understood by those skilled in the art, within the scope of the present invention. Moreover, the present invention may be embodied through combining the various embodiments, insofar as there are no contradictions.

### List of reference signs

- 10:: Information Displaying Device
- 11:: Operation Inputting Portion
- 12:: Touch Operation Detecting Portion
- 13:: Communication Interface Portion
- 14:: Screen Displaying Portion
- 15:: Storing Portion
- 15A:: Display Information Database
- 15B:: Virtual Hand Graphical Data
- 15P:: Program
- 16:: Calculation Processing Portion
- 16A:: Display Controlling Portion
- 16B:: Virtual Hand Generating Portion
- 16C:: Screen Generating Portion
- 17A:: Transformation Ratio Calculating Portion
- 17B:: Virtual Hand Transforming Portion
- 17C:: Transformation Ratio Adjusting Portion

## Claims

1. An information displaying device (10) for displaying on a screen displaying portion display data that includes a plurality of objects that are subject to a selection operation by a user, comprising:
a virtual hand generating portion (16B) for generating a virtual hand that displays an image of an imaginary hand of the user; and
a screen generating portion (16C) for generating screen data for indicated display data and generating composited screen data wherein a virtual hand is composited at a location in the screen data depending on a user touch operation detected by a touch operation detecting portion (12), **characterized in that**
the virtual hand generating portion (16B) includes:
a transformation ratio calculating portion (17A) for calculating a display scale of objects in the screen display, based on the spacing between objects and/or the sizes of objects included in the display data, and for calculating a transformation ratio for the virtual hand from the display scale and a finger width of the virtual hand; and
a virtual hand transforming portion (17B) for transforming the virtual hand based on the calculated transformation ratio to a size suited to the object on the screen display through enlarging or reducing the virtual hand.

2. An information displaying device as set forth in Claim 1, wherein: the transformation ratio calculating portion (17A), when calculating the display scale, identifies an estimated operating area based on a finger position of the virtual hand, and calculates the display scale from the spacing between objects or the size of an object included in the estimated operating area of the display data.

3. An information displaying device as set forth in Claim 1 or Claim 2, wherein:
the transformation ratio calculating portion (17A), when calculating the display scale, calculates statistical values for the spacing and sizes of the individual objects, and defines, as the display scale, the statistical value for the spacing or for the sizes, whichever is the smallest.

4. An information displaying device as set forth in any one of Claim 1 through Claim 3, wherein:
when a touch operation indicates a virtual hand enlarging or reducing operation, the virtual hand generating portion (16B) further includes a transformation ratio adjusting portion (17C) for adjusting, larger or smaller, the transformation ratio that is used by the virtual hand generating portion (16B).

5. An information displaying method for generating display data from display information and displaying it on a screen displaying portion (14) that includes a plurality of objects that are subject to a selection operation by a user, including:
a virtual hand generating step wherein a virtual hand generating portion (16B) generates a virtual hand that displays an image of an imaginary hand of the user; and
a screen generating step (105) wherein a screen generating portion (16C) generates screen data for indicated display data and generating composited screen data wherein a virtual hand is composited at a location in the screen data depending on a user touch operation detected by a touch operation detecting portion (12), **characterized in that** the virtual hand generating step includes:
a transformation ratio calculating step (102, 103) for calculating a display scale of objects in the screen display, based on the spacing between objects and/or the sizes of objects included in the display data, and for calculating a transformation ratio for the virtual hand from the display scale and a finger width of the virtual hand; and
a virtual hand transforming step (104) for transforming the virtual hand based on the calculated transformation ratio to a size suited to the object on the screen display through enlarging or reducing the virtual hand.

6. The method according to claim 5, wherein,
during the transformation ratio calculating step (102, 103), when calculating the display scale, an estimated operating area based on a finger position of the virtual hand is identified, and the display scale from the spacing between objects or the size of an object included in the estimated operating area of the display data is calculated.

7. The method as set forth in Claim 5 or Claim 6, wherein:
during the transformation ratio calculating step (102, 103), when calculating the display scale, statistical values for the spacing and sizes of the individual objects is calculated, and the statistical value for the spacing or for the sizes, whichever is the smallest, is defined as the display scale.

8. The method as set forth in any one of Claim 5 through Claim 7, wherein:
when a touch operation indicates a virtual hand enlarging or reducing operation, the virtual hand generating step further includes a transformation ratio adjusting step (200, 201, 202, 203, 204) for adjusting, larger or smaller, the transformation ratio, wherein, preferably, the method further includes using the adjusted the transformation ratio in the virtual hand generating step.

9. A computer program for causing a computer to perform the steps of a method according in any one of Claim 5 through Claim 8.

## Patentansprüche

1. Informationsdarstellungsvorrichtung (10) zum Darstellen von Darstellungsdaten, die mehrere Objekte beinhalten, die von einem Benutzer einem Auswahlvorgang unterzogen werden, auf einem Bildschirm-Darstellungsabschnitt, Folgendes umfassend:
einen Virtuelle-Hand-Erzeugungsabschnitt (16B) zum Erzeugen einer virtuellen Hand, die ein Abbild einer imaginären Hand des Benutzers darstellt, und
einen Bildschirm-Erzeugungsabschnitt (16C) zum Erzeugen von Bildschirmdaten für angegebene Darstellungsdaten und zum Erzeugen von zusammengesetzten Bildschirmdaten, wobei eine virtuelle Hand an einer Position in den Bildschirmdaten zusammengesetzt wird, die von einem Berührungsvorgang durch den Benutzer abhängt, der von einem Berührungsvorgang-Erkennungsabschnitt (12) erkannt wird, **dadurch gekennzeichnet, dass**
der Virtuelle-Hand-Erzeugungsabschnitt (16B) Folgendes beinhaltet:
einen Umwandlungsverhältnis-Berechnungsabschnitt (17A) zum Berechnen eines Darstellungsmaßstabes von Objekten in der Bildschirmdarstellung, basierend auf dem Abstand zwischen Objekten und/oder den Größen von Objekten, die in den Darstellungsdaten enthalten sind, und zum Berechnen eines Umwandlungsverhältnisses für die virtuelle Hand aus dem Darstellungsmaßstab und einer Fingerbreite der virtuellen Hand und
einen Virtuelle-Hand-Umwandlungsabschnitt (17B) zum auf dem berechneten Umwandlungsverhältnis basierenden Umwandeln der virtuellen Hand in eine Größe, die für das Objekt in der Bildschirmdarstellung geeignet ist, durch Vergrößern oder Verkleinern der virtuellen Hand.

2. Informationsdarstellungsvorrichtung nach Anspruch 1, wobei der Umwandlungsverhältnis-Berechnungsabschnitt (17A) beim Berechnen des Darstellungsmaßstabes basierend auf einer Fingerposition der virtuellen Hand einen geschätzten Operationsbereich identifiziert und aus dem Abstand zwischen Objekten oder der Größe eines Objekts, das im geschätzten Operationsbereich der Darstellungsdaten enthalten ist, den Darstellungsmaßstab berechnet.

3. Informationsdarstellungsvorrichtung nach Anspruch 1 oder 2, wobei der Umwandlungsverhältnis-Berechnungsabschnitt (17A) beim Berechnen des Darstellungsmaßstabes statistische Werte für den Abstand und die Größen der einzelnen Objekte berechnet und den statistischen Wert für den Abstand oder für die Größen, je nachdem welcher der kleinste ist, als Darstellungsmaßstab definiert.

4. Informationsdarstellungsvorrichtung nach einem der Ansprüche 1 bis 3, wobei, wenn ein Berührungsvorgang einen Vergrößerungs- oder Verkleinerungsvorgang der virtuellen Hand angibt, der Virtuelle-Hand-Erzeugungsabschnitt (16B) ferner einen Umwandlungsverhältnis-Einstellungsabschnitt (17C) beinhaltet, um das Umwandlungsverhältnis, das vom Virtuelle-Hand-Erzeugungsabschnitt (16B) verwendet wird, größer oder kleiner einzustellen.

5. Informationsdarstellungsverfahren zum Erzeugen von Darstellungsdaten aus Darstellungsinformationen und zum Darstellen derselben auf einem Bildschirm-Darstellungsabschnitt (14), der mehrere Objekte beinhaltet, die von einem Benutzer einem Auswahlvorgang unterzogen werden, Folgendes beinhaltend:
einen Virtuelle-Hand-Erzeugungsschritt, wobei ein Virtuelle-Hand-Erzeugungsabschnitt (16b) eine virtuelle Hand erzeugt, die ein Abbild einer imaginären Hand des Benutzers darstellt, und
einen Bildschirm-Erzeugungsschritt (105), wobei ein Bildschirm-Erzeugungsabschnitt (16C) Bildschirmdaten für angegebene Darstellungsdaten und zusammengesetzte Bildschirmdaten erzeugt, wobei eine virtuelle Hand an einer Position in den Bildschirmdaten zusammengesetzt wird, die von einem Berührungsvorgang durch den Benutzer abhängt, der von einem Berührungsvorgang-Erkennungsabschnitt (12) erkannt wird, **dadurch gekennzeichnet, dass** der Virtuelle-Hand-Erzeugungsschritt Folgendes beinhaltet:
einen Umwandlungsverhältnis-Berechnungsschritt (102, 103) zum Berechnen eines Darstellungsmaßstabes von Objekten in der Bildschirmdarstellung, basierend auf dem Abstand zwischen Objekten und/oder den Größen von Objekten, die in den Darstellungsdaten enthalten sind, und zum Berechnen eines Umwandlungsverhältnisses für die virtuelle Hand aus dem Darstellungsmaßstab und einer Fingerbreite der virtuellen Hand und
einen Virtuelle-Hand-Umwandlungsschritt (104) zum auf dem berechneten Umwandlungsverhältnis basierenden Umwandeln der virtuellen Hand in eine Größe, die für das Objekt in der Bildschirmdarstellung geeignet ist, durch Vergrößern oder Verkleinern der virtuellen Hand.

6. Verfahren nach Anspruch 5, wobei während des Umwandlungsverhältnis-Berechnungsschrittes (102, 103) beim Berechnen des Darstellungsmaßstabes, basierend auf einer Fingerposition der virtuellen Hand ein geschätzter Operationsbereich identifiziert und der Darstellungsmaßstab aus dem Abstand zwischen den Objekten oder der Größe eines im geschätzten Operationsbereich der Darstellungsdaten enthaltenen Objekts berechnet wird.

7. Verfahren nach Anspruch 5 oder 6, wobei während des Umwandlungsverhältnis-Berechnungsschrittes (102, 103) beim Berechnen des Darstellungsmaßstabes statistische Werte für den Abstand und die Größen der einzelnen Objekte berechnet werden und der statistische Wert für den Abstand oder für die Größen, je nachdem welcher der kleinste ist, als Darstellungsmaßstab definiert wird.

8. Verfahren nach einem der Ansprüche 5 bis 7, wobei der Virtuelle-Hand-Erzeugungsschritt ferner einen Umwandlungsverhältnis-Einstellungsschritt (200, 201, 202, 203, 204) zum Einstellen eines größeren oder kleineren Umwandlungsverhältnisses beinhaltet, wenn ein Berührungsvorgang einen Vergrößerungs- oder Verkleinerungsvorgang der virtuellen Hand angibt, wobei das Verfahren vorzugsweise ferner das Verwenden des eingestellten Umwandlungsverhältnisses im Virtuelle-Hand-Erzeugungsschritt beinhaltet.

9. Computerprogramm, um zu bewirken, dass ein Computer die Schritte des Verfahrens nach einem der Ansprüche 5 bis 8 ausführt.

## Revendications

1. Dispositif d'affichage d'informations (10) pour afficher, sur une partie d'affichage d'écran, des données d'affichage qui comprennent une pluralité d'objets qui font l'objet d'une opération de sélection par un utilisateur, comprenant :
une partie de génération de main virtuelle (16B) pour générer une main virtuelle qui affiche une image d'une main imaginaire de l'utilisateur ; et
une partie de génération d'écran (16C) pour générer des données d'écran pour des données d'affichage indiquées et générer des données d'écran composées, dans lequel une main virtuelle est composée à un emplacement dans les données d'écran en fonction d'une opération de toucher d'utilisateur détectée par une partie de détection d'opération de toucher (12), **caractérisé en ce que** la partie de génération de main virtuelle (16B) comprend :
une partie de calcul de rapport de transformation (17A) pour calculer une échelle d'affichage d'objets dans l'affichage d'écran, sur la base de l'espacement entre les objets et/ou des tailles des objets inclus dans les données d'affichage, et pour calculer un rapport de transformation pour la main virtuelle à partir de l'échelle d'affichage et d'une largeur de doigt de la main virtuelle ; et
une partie de transformation de main virtuelle (17B) pour transformer la main virtuelle sur la base du rapport de transformation calculé en une taille appropriée pour l'objet sur l'affichage d'écran par un agrandissement ou une réduction de la main virtuelle.

2. Dispositif d'affichage d'informations selon la revendication 1, dans lequel : la partie de calcul de rapport de transformation (17A), lors du calcul de l'échelle d'affichage, identifie une zone d'opération estimée sur la base d'une position de doigt de la main virtuelle, et calcule l'échelle d'affichage à partir de l'espacement entre les objets ou de la taille d'un objet inclus dans la zone d'opération estimée des données d'affichage.

3. Dispositif d'affichage d'informations selon la revendication 1 ou la revendication 2, dans lequel :
la partie de calcul de rapport de transformation (17A), lors du calcul de l'échelle d'affichage, calcule des valeurs statistiques pour l'espacement et les tailles des objets individuels, et définit, en tant qu'échelle d'affichage, la valeur statistique pour l'espacement ou celle pour les tailles, à savoir la plus petite des deux.

4. Dispositif d'affichage d'informations selon l'une quelconque des revendications 1 à 3, dans lequel :
lorsqu'une opération de toucher indique une opération d'agrandissement ou de réduction de main virtuelle, la partie de génération de main virtuelle (16B) comprend en outre une partie d'ajustement de rapport de transformation (17C) pour ajuster, en plus grand ou en plus petit, le rapport de transformation qui est utilisé par la partie de génération de main virtuelle (16B).

5. Procédé d'affichage d'informations pour générer des données d'affichage à partir d'informations d'affichage et les afficher sur une partie d'affichage d'écran (14) qui comprend une pluralité d'objets qui font l'objet d'une opération de sélection par un utilisateur, comprenant :
une étape de génération de main virtuelle, dans lequel une partie de génération de main virtuelle (16B) génère une main virtuelle qui affiche une image d'une main imaginaire de l'utilisateur ; et
une étape de génération d'écran (105), dans lequel une partie de génération d'écran (16C) génère des données d'écran pour des données d'affichage indiquées et génère des données d'écran composées, dans lequel une main virtuelle est composée à un emplacement dans les données d'écran en fonction d'une opération de toucher d'utilisateur détectée par une partie de détection d'opération de toucher (12), **caractérisé en ce que** l'étape de génération de main virtuelle comprend :
une étape de calcul de rapport de transformation (102, 103) pour calculer une échelle d'affichage d'objets dans l'affichage d'écran, sur la base de l'espacement entre les objets et/ou des tailles des objets inclus dans les données d'affichage, et pour calculer un rapport de transformation pour la main virtuelle à partir de l'échelle d'affichage et d'une largeur de doigt de la main virtuelle ; et
une étape de transformation de main virtuelle (104) pour transformer la main virtuelle sur la base du rapport de transformation calculé en une taille appropriée pour l'objet sur l'affichage d'écran par un agrandissement ou une réduction de la main virtuelle.

6. Procédé selon la revendication 5, dans lequel,
pendant l'étape de calcul de rapport de transformation (102, 103), lors du calcul de l'échelle d'affichage, une zone d'opération estimée sur la base d'une position de doigt de la main virtuelle est identifiée, et l'échelle d'affichage est calculée à partir de l'espacement entre les objets ou de la taille d'un objet inclus dans la zone d'opération estimée des données d'affichage.

7. Procédé selon la revendication 5 ou la revendication 6, dans lequel :
pendant l'étape de calcul de rapport de transformation (102, 103), lors du calcul de l'échelle d'affichage, des valeurs statistiques pour l'espacement et les tailles des objets individuels sont calculées, et la valeur statistique pour l'espacement ou celle pour les tailles, à savoir la plus petite des deux, est définie en tant qu'échelle d'affichage.

8. Procédé selon l'une quelconque des revendications 5 à 7, dans lequel :
lorsqu'une opération de toucher indique une opération d'agrandissement ou de réduction de main virtuelle, l'étape de génération de main virtuelle comprend en outre une étape d'ajustement de rapport de transformation (200, 201, 202, 203, 204) pour ajuster, en plus grand ou en plus petit, le rapport de transformation, dans lequel, de préférence, le procédé comprend en outre l'utilisation du rapport de transformation ajusté à l'étape de génération de main virtuelle.

9. Programme d'ordinateur pour amener un ordinateur à effectuer les étapes d'un procédé selon l'une quelconque des revendications 5 à 8.
